# EUROPEAN PATENT SPECIFICATION

(11) **EP 2 621 835 B1**
(45) Date of publication and mention of the grant of the patent: **12.04.2017**
(21) Application number: 11764406.2
(22) Date of filing: 20.09.2011
(51) Int. Cl.: B65G 17/08, B65G 17/24, B65G 17/40

(54) **CONVEYOR, BELT, AND MODULE HAVING MULTI-DIRECTIONAL WHEELS**
FÖRDERVORRICHTUNG BAND UND MODUL MIT MULTIDIREKTIONALEN RÄDERN
TRANSPORTEUR, BANDE ET MODULE COMPORTANT DES ROUES MULTIDIRECTIONNELLES

(30) Priority: 30.09.2010 US 894396
(43) Date of publication of application: 07.08.2013
(73) Proprietor: Laitram, L.L.C., Harahan, LA 70123 (US)
(72) Inventor: FOURNEY, Matthew, L., Laurel MD 20723 (US)
(74) Representative: Walker, Ross Thomson
(86) International application number: PCT/US2011/052284
(87) International publication number: WO 2012/044494

(56) References cited:
- US-A- 3 964 588
- US-A1- 2008 000 749
- US-B2- 6 494 312

## Description

### BACKGROUND

The invention relates generally to power-driven conveyors and more particularly to belt conveyors having actuated, belt-mounted multi-directional wheels for diverting articles conveyed by the belt.

Many package- and material-handling applications require that conveyed articles be diverted to a side of a conveyor. Two examples are sorting articles off the side of a belt and registering articles against the side of the belt. U.S. Patent No. 6,494,312, "Modular Roller-Top Conveyor Belt with Obliquely-Arranged Rollers," December 17, 2002, to Costanzo discloses a conveyor belt according to the preamble of claim 1, a conveyor according to the preamble of claim 9 and a conveyor belt module according to the preamble of claim 10. Cylindrical rollers are mounted in a conveyor belt on axles oblique to the direction of belt travel are actuated by underlying bearing surfaces on which the oblique rollers ride as the belt advances in the direction of belt travel. The contact between the rollers and the bearing surfaces causes the rollers to rotate as the belt advances. The rotation of the oblique rollers pushes articles atop the rollers across the conveyor belt toward a side of the conveyor. These oblique-roller belts work extremely well on planar bearing surfaces as long as the rollers are arranged to rotate at an angle between the direction of belt travel (defined as a roller angle of 0°) and about 30° or so from the direction of belt travel. For roller angles greater than 30°, the rollers slip too much on the planar bearing surfaces.

U.S. Patent No. 6,968,941, "Apparatus and Methods for Conveying Objects," November 29, 2005, to Fourney describes an improved bearing surface that accommodates a much greater range of roller angles. Instead of using a planar bearing surface, Fourney uses the outer peripheries of actuating rollers arranged to rotate on axes in the direction of belt travel. As the conveyor belt advances, the oblique belt rollers roll on the underlying actuating rollers, which are also caused to roll on their axes. Because the bearing surface on the periphery is rolling, slip is reduced and greater roller angles can be accommodated. The greater roller angles permit much sharper article-diversion trajectories than are possible with a planar bearing surface. But actuating rollers are more expensive and slightly more complicated than simple planar bearing surfaces.

### SUMMARY

These shortcomings are addressed by a conveyor embodying features of the invention. One version of such a conveyor comprises a conveyor belt having multi-directional wheels that ride on a bearing surface. The belt has an inner side and an outer side and a pair of opposite side edges. Each of the multi-directional wheels includes a hub having a central axis of rotation and an outer periphery. Rollers are arranged on the outer periphery of the hub to rotate the rollers on axes that are transverse to the central axis of rotation of the hub. The periphery of the hub extends past the inner and outer sides of the conveyor belt. The bearing surface, which underlies the inner side of the conveyor belt, contacts the rollers on the hub's periphery that extends past the inner side of the belt to provide a surface for the rollers to ride on and cause the wheels to rotate on their central axes of rotation as the conveyor belt advances along the bearing surface.

In another aspect, a conveyor belt embodying features of the invention comprises an endless loop having an outer side and an inner side defining the thickness of the belt and a pair of opposite side edges defining the width of the belt. Multi-directional wheels are disposed at spaced apart locations along the endless loop. Each wheel includes a hub having a central axis of rotation and an outer periphery. Rollers are arranged on the periphery of the hub to rotate on roller axes transverse to the hub's central axis of rotation.

In yet another aspect, a conveyor belt module embodying features of the invention comprises a module body that extends in length from a first end to a second end, in width from a first side edge to a second side edge, and in thickness from a top side to a bottom side. Hinge elements are disposed along the first and second ends. A cavity in the module body opens onto at least one of the top side, the bottom side, the first side edge, and the second side edge. A multi-directional wheel is received in the cavity for rotation. The wheel includes a hub with a central axis of rotation and an outer periphery. Rollers are arranged on the outer periphery to rotate on roller axes transverse to the hub's central axes of rotation. The wheel rotates in the cavity about the central axis of rotation.

### BRIEF DESCRIPTION OF THE DRAWINGS

These aspects and features of the invention, as well as its advantages, are explained in more detail in the following description, appended claims, and accompanying drawings, in which:
FIG. 1 is an isometric view of a conveyor belt module embodying features of the invention including embedded multi-directional wheels;
FIG. 2 is an axonometric view of the multi-directional wheel in the conveyor belt module of FIG. 1;
FIG. 3 is a cross-sectional view of the multi-directional wheel of FIG. 2 taken along lines 3-3;
FIG. 4 is a top plan view of another version of a multi-directional wheel usable in a conveyor belt module as in FIG. 1;
FIG. 5 is a top plan view of a portion of a conveyor belt constructed of conveyor belt modules as in FIG. 1;
FIG. 6 is a front elevation view of a conveyor having a conveyor belt as in FIG. 5; and
FIG. 7A is a side view of a unidirectional roller usable in a conveyor belt as in FIG. 5, and FIG. 7B is a cross-sectional view of the unidirectional roller of FIG. 7A taken along lines 5A-5A.

### DETAILED DESCRIPTION

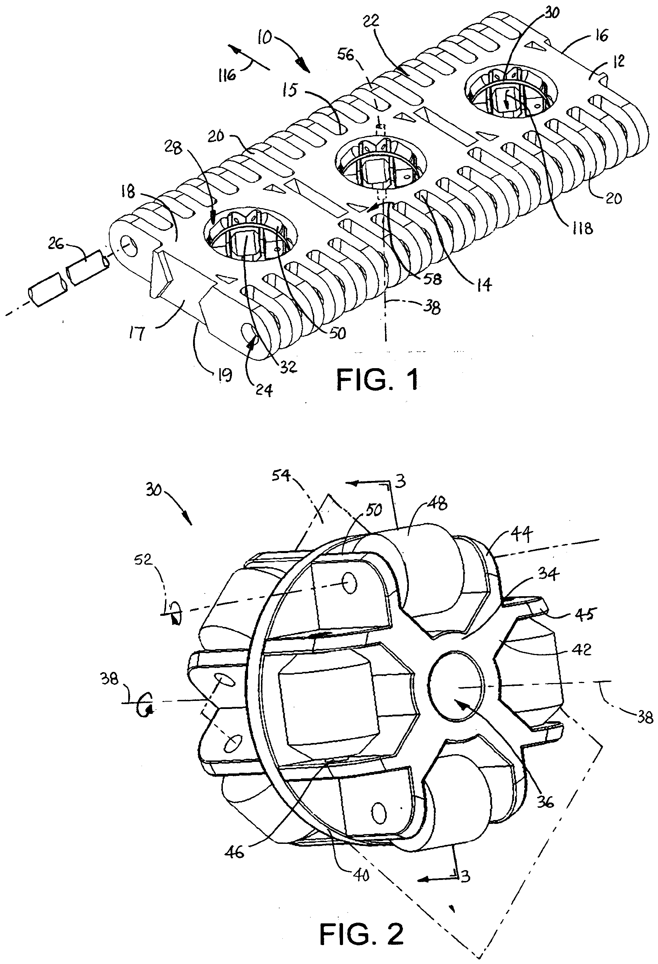

A conveyor belt module embodying features of the invention is shown in FIG. 1. The belt module 10 is made of a thermoplastic polymer in an injection-molding process. The module has a module body 12 that extends in length from a first end 14 to a second end 15, in width from a first side edge 16 to a second side edge 17, and in thickness from a top side 18 to a bottom side 19. Hinge elements 20 are spaced apart laterally by gaps 22 across the width of the module 10 along each end 14,15 of the module body 12. Laterally aligned apertures 24 in each of the hinge elements 20 admit hinge rods 26 to connect belt modules together. Cavities 28 formed in the module body 12 open onto the top and bottom sides 18, 19 of the module. A multi-directional wheel 30 is rotatably mounted in each of the cavities. Salient portions 32 of the wheel extend past the top and bottom sides 18, 19 of the module 10.

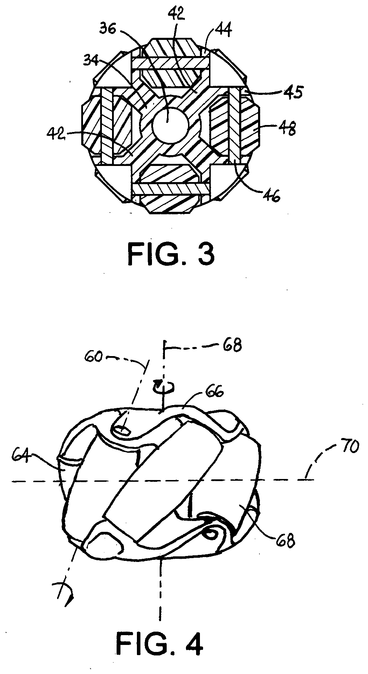

One version of a multi-directional wheel is shown in more detail in FIGS. 2 and 3. The wheel 30 includes a hub 34 surrounding a central bore 36 that defines an axis of rotation 38 of the wheel. The hub shown has a central disk portion 40 dividing the wheel into two halves. Each half has four spokes 42 extending radially outward to a forked pair of stanchions 44, 45 at distal ends of the spokes. The two stanchions of each pair are separated by an angle of 90°, as are consecutive spokes. Each stanchion supports an end of an axle 46 of a roller 48. In this version, each hub half has four rollers positioned every 90° around the outer periphery 50 of the wheel. The rollers on one hub half are offset 45° from the rollers on the other half to position the rollers more uniformly around the periphery 50 of the hub 34. The axes 52 of the axles 46 of the freely rotatable rollers 48 on the outer periphery of the hub are oriented transverse to the central axis of rotation 38 of the hub. (As used in this description, transverse axes are axes that are not parallel to each other, which includes skew axes that lie in different planes.) The axes 52 of each of the rollers 48 in each hub half lie in a plane 54 that is normal to the central axis of rotation 38. And the rollers 48 in FIG. 2 in each hub half orbit the central axis of rotation 38 in the plane containing their axes. Although this version of wheel has two sets of peripheral rollers lying in parallel planes offset from each other along the central axis of the hub, the wheel could be made with a set of peripheral rollers in a single plane or in more than two planes.

As shown in FIG. 1, the multi-directional wheel 30 is mounted in each cavity 28 on an axle 56 oblique to the side edges 16, 17 of the module body 12. This means that the wheel rotates in the direction of arrow 58 about its central axis of rotation 38. As also shown in FIG. 1, the outer periphery 50 of the wheel 30 extends past the top surface 18 of the module body 12.

Another version of a multi-directional wheel that could be rotatably mounted in the cavities 28 of the belt module 10 of FIG. 1 is shown in FIG. 4. In this version, the axes 60 of elongated crowned rollers 62 at the periphery 64 of the wheel hub 66 are also transverse to the central axis of rotation of the hub. Unlike the roller axes 52 on each hub half in FIGS. 2 and 3, which lie in a common plane, the roller axes 60 of the rollers 62 in the wheel of FIG. 4, are not coplanar. But the rollers 62 themselves orbit the central axis of rotation 68 in a plane 70 normal to the axis of rotation.

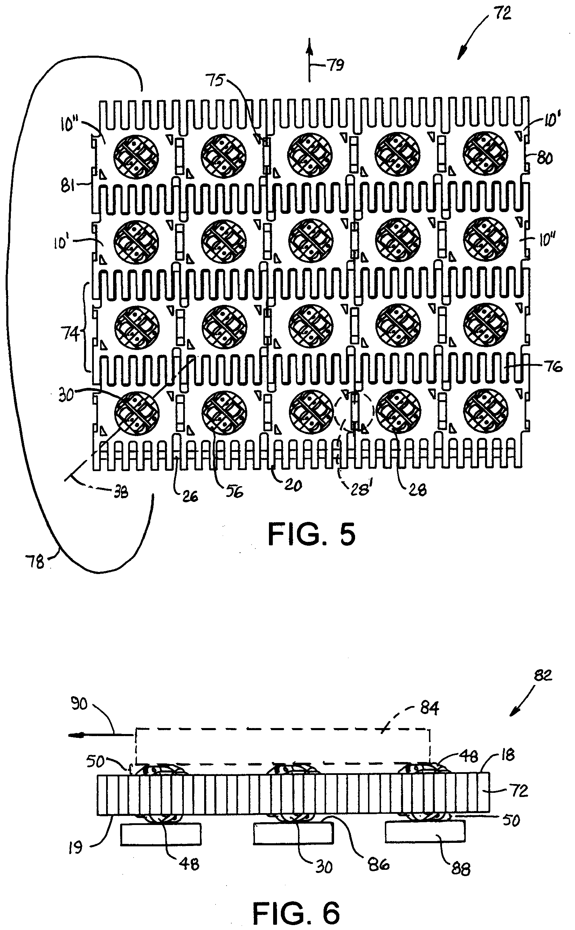

FIG. 5 shows a portion of a conveyor belt constructed of belt modules as in FIG. 1. The belt 72 is shown arranged in a bricklay pattern of wide modules 10' and narrow modules 10". In this example, each belt row 74 has two modules. But a belt of any width can be made by adding more modules to each belt row. A longitudinal seam 75 is formed between adjacent side-by-side modules, but is discontinuous from row-to-row in the bricklay pattern. The hinge elements 20 of consecutive belt rollers are interleaved and joined by a hinge pin 26 at a hinge joint 76. The rollers are connected end to end to form an endless belt loop 78 that is conventionally trained around drive and idle sprockets and driven in a direction of belt travel 79 along a conveying path. Each of the belt modules shown includes at least one cavity 28 in which a multi-directional wheel 30 is mounted on an axle 56 defining an axis of rotation 38 oblique to the side edges 80, 81 of the conveyor belt 72. The cavities in FIG. 5 are shown disposed between the side edges of each module. But the cavities could be formed at the seam 75 in the side edges with adjacent modules each forming a portion of the cavity 28' and supporting an axle.

The conveyor belt 72 of FIG. 5 is shown in a conveyor embodying features of the invention in FIG. 6. The conveyor belt 72 is shown advancing on the conveyor 82 along a carryway with an article 84 supported atop the peripheries 50 of three multi-directional wheels 30. Bearing surfaces 86 underlie the conveyor belt 72 along the carryway. The bearing surfaces shown in this example are the top surfaces 86 of linear wear strips 88-one under each lane of multi-directional wheels 30. As the conveyor belt advances (into the page in FIG. 6), the wheels 30, their peripheries 50 extending past the bottom side 19 of the belt, rotate on their oblique axes as the peripheral rollers 48 rotate on the bearing surfaces 86. In this way, the bearing surfaces actuate the multi-directional wheels. The article 84 sitting atop the actuated wheels is diverted toward a side of the conveyor in the direction of arrow 90 in the direction of rotation of the wheel on its axis.

Thus, the multi-directional wheels 30 with their peripheral rollers 48 on different roller axes ride on planar bearing surfaces 86 with less slip than single-axis rollers at large oblique rotation-axis angles.

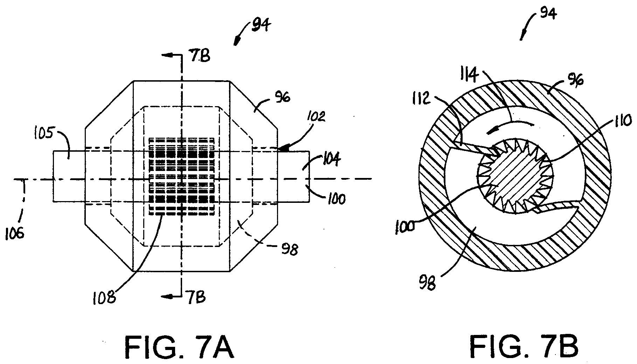

When the rollers are freely rotatable on the roller axes and able to rotate in both directions, the inertia of articles conveyed atop the wheels can cause the rollers to rotate, at least temporarily, opposite to the intended direction. In applications where even short-term reverse rotation of the rollers causes a problem, unidirectional rollers can be used instead of bidirectional rollers. As shown in FIGS. 7A and 7B, a unidirectional roller 94 has a roller body 96 surrounding an inner void 98. An axle 100 is received in a bore 102 that extends through the inner void. The ends 104, 105 of the axle are fixed in the periphery of a wheel, such as the wheel 30 of FIG. 2. The roller is free to rotate on the roller axis 106 defined by the fixed axle 100. A ratchet gear 108 having external teeth 110 is formed in the middle of the axle 100 and resides within the void 98. The roller body is made of two parts to admit the axle before the parts are joined. Structure in the form of, for example, one or more pawls 112 extending from the roller body 96 into the void 98 engages structure on the fixed axle in the form of the teeth 110 of the ratchet gear 108. The structure forming the ratchet mechanism limits the rotation of the roller 94 on its axis 106 to only one direction 114. For unidirectional roller mounted on a wheel as in FIG. 1 in a belt module used to construct a conveyor belt advancing in a direction of belt travel 116, the unidirectional roller's direction of rotation is given by arrow 118.

Although the invention has been described in detail with reference to one or two versions of conveyors, other versions are possible. For example, each row of the modular plastic conveyor belt shown in FIG. 5 need not have multi-directional wheels. Some rows of some modules could be devoid of the wheels. As another example, the conveyor belt need not be a modular plastic conveyor belt made of modules as in FIG. 1. It could be a pulley-driven or positively driven flat belt or a slat conveyor or other chain structure that can accommodate multi-directional wheels. As yet another example, the wheels described have bores receiving fixed axles around which the hub rotates. The axles could be pressed-fitted into the hub or could be stubs protruding from opposite sides of the hub whose ends are rotatably retained in the belt. The same is true of the rollers, whose axles could be rotatably retained by structure in the periphery of the hub. So, as these few examples suggest, the scope of the invention is defined by the claims and not limited to the details of the described versions.

## Claims

1. A conveyor belt (72) comprising:
an endless loop having an outer side (18) and an inner side (19) defining the thickness of the conveyor belt (82) and a pair of opposite side edges (16 and 17) defining the width of the conveyor belt (82) ;
**characterised in that** the conveyor belt further comprises:
a plurality of multi-directional wheels (30) disposed at spaced apart locations along the endless loop, each wheel (30) including:
a hub (34) having a central axis of rotation (38) and an outer periphery (50);
a plurality of rollers (48) arranged on the periphery of the hub (34) to rotate on roller axes (52) transverse to the central axis of rotation (38) of the hub.

2. A conveyor belt (72) as in claim 1 wherein the conveyor belt includes a plurality of cavities (28) opening onto at least one of the outer and inner sides (18; 19) of the endless loop and wherein the multi-directional wheels (30) are mounted in the cavities with the outer peripheries (50) of the hubs (34) extending from the cavities past the at least one of the outer and inner sides.

3. A conveyor belt (72) as in claim 2 wherein the cavities (28) open onto both the outer and inner sides (18; 19) and wherein the outer peripheries (50) of the hubs (34) extend from the cavities past the inner and outer sides.

4. A conveyor belt (72) as in claim 1 wherein the endless loop comprises a plurality of belt modules (16) hingedly linked together in rows (74) and wherein at least some of the rows include cavities (28) in which the multi-directional wheels (30) are mounted.

5. A conveyor belt (72) as in claim 1 wherein the multi-directional wheels (30) are mounted in the endless loop with the central axes of rotation (38) of the hubs (34) disposed between the inner and outer sides (18; 19).

6. A conveyor belt (72) as in claim 1 wherein the central axes of rotation (38) of the hubs (34) are oriented oblique to the side edges (16, 17) of the conveyor belt.

7. A conveyor belt (72) as in claim 1 wherein the roller axes (52) lie in a plane normal to the central axis of rotation (38) of the hub (34).

8. A conveyor belt (72) as in claim 1 wherein the rollers (94) include structure (112) (100) to restrict rotation of the rollers on the roller axes (100) to one direction.

9. A conveyor (82) comprising:
a conveyor belt (72)
having an inner side (19) and an outer side (18) and a pair of opposite side edges (16 and 17); and
a bearing surface (86) underlying the inner side (19) of the conveyor belt; **characterised in that** the conveyor belt further comprises:
a plurality of multi-directional wheels (30), each wheel including:
a hub (34) having a central axis of rotation (38) and an outer periphery (50);
a plurality of rollers (48) arranged on the periphery of the hub (34) to rotate on roller axes (52) transverse to the central axis of rotation (38) of the hub;
wherein the periphery of the hub extends past the inner and outer sides (19, 18) of the conveyor belt; and wherein the bearing surface (86) contacts the rollers (48) on the periphery of the hub extending past the inner side of the conveyor belt to provide a surface (86) for the rollers to ride on and cause the wheel to rotate on the central axis of rotation of the hub as the conveyor belt advances along the bearing surface.

10. A conveyor belt module (10) comprising:
a module body (12) extending in a length direction from a first end (14) to a second end (15), in width from a first side edge (16) to a second side edge (17), and in thickness from a top side (18) to a bottom side (19);
hinge elements (20) disposed along the first and second ends;
a cavity (28) in the module body between the first and second ends opening onto at least one of the top side, the bottom side, the first side edge, and the second side edge; **characterized in that** the conveyor belt module (10) further comprises: a multi-directional wheel (30) including a hub (34) having a central axis of rotation (38) and an outer periphery (50) with a plurality of rollers (48) arranged on the periphery to rotate on roller axes (52) transverse to the central axis of rotation of the hub;
wherein the wheel is received in the cavity for rotation about the central axis of rotation of the hub.

11. A conveyor belt module (10) as in claim 10 wherein the cavity (28) opens onto the top and bottom sides (18; 19) and wherein the outer periphery (50) of the hub (34) extends from the cavity past the top and bottom sides.

12. A conveyor belt module (10) as in claim 10 wherein the multi-directional wheel (30) is mounted in the module body (12) with the central axis of rotation (38) of the hub (34) disposed between the top and bottom sides (18; 19) of the module body.

13. A conveyor belt (10) module as in claim 10 wherein the central axis of rotation (38) of the hub (34) is oriented oblique to the first and second side edges (16; 17) of the module body (12).

14. A conveyor belt module (10) as in claim 10 wherein the roller axes (52) lie in a plane normal to the central axis of rotation (38) of the hub (34).

15. A conveyor belt module (10) as in claim 10 wherein the rollers (94) include structure (112) to restrict rotation of the rollers on the roller axes (110) to one direction.

## Patentansprüche

1. Förderband (72), umfassend:
eine Endlosschleife mit einer Außenseite (18) und einer Innenseite (19), die die Dicke des Förderbands (82) definieren, und einem Paar gegenüberliegende Seitenkanten (16 und 17), die die Breite des Förderbands (82) definieren;
**dadurch gekennzeichnet, dass** das Förderband ferner Folgendes umfasst:
eine Mehrzahl von multidirektionalen Rädern (30), die an beabstandeten Stellen entlang der Endlosschleife angeordnet sind, wobei jedes Rad (30) Folgendes beinhaltet:
eine Nabe (34) mit einer zentralen Drehachse (38) und einer äußeren Peripherie (50);
eine Mehrzahl von Rollen (48), die auf der Peripherie der Nabe (34) angeordnet sind, um sich auf Rollenachsen (52) quer zur zentralen Drehachse (38) der Nabe zu drehen.

2. Förderband (72) nach Anspruch 1, worin das Förderband eine Mehrzahl von Hohlräumen (28) beinhaltet, die sich zu mindestens einer der Außen- und Innenseiten (18; 19) der Endlosschleife hin öffnen und worin die multidirektionalen Räder (30) in den Hohlräumen montiert sind, wobei sich die äußeren Peripherien (50) der Naben (34) von den Hohlräumen an der mindestens einen der Außen- und Innenseiten vorbei erstrecken.

3. Förderband (72) nach Anspruch 2, worin sich die Hohlräume (28) sowohl zu den Außen- als auch Innenseiten (18; 19) hin öffnen und worin sich die äußeren Peripherien (50) der Naben (34) von den Hohlräumen an den Innen- und Außenseiten vorbei erstrecken.

4. Förderband (72) nach Anspruch 1, worin die Endlosschleife eine Mehrzahl von Bandmodulen (16) umfasst, die in Reihen (74) gelenkig miteinander verbunden sind und worin mindestens einige der Reihen Hohlräume (28) beinhalten, in denen die multidirektionalen Räder (30) montiert sind.

5. Förderband (72) nach Anspruch 1, worin die multidirektionalen Räder (30) in der Endlosschleife montiert sind, wobei die zentralen Drehachsen (38) der Naben (34) zwischen den Innen- und Außenseiten (18; 19) angeordnet sind.

6. Förderband (72) nach Anspruch 1, worin die zentralen Drehachsen (38) der Naben (34) schräg zu den Seitenkanten (16, 17) des Förderbands orientiert sind.

7. Förderband (72) nach Anspruch 1, worin die Rollenachsen (52) in einer Ebene normal zur zentralen Drehachse (38) der Nabe (34) liegen.

8. Förderband (72) nach Anspruch 1, worin die Rollen (94) eine Struktur (112) zur Beschränkung der Drehung der Rollen auf den Rollenachsen (100) auf eine Richtung beinhalten.

9. Fördervorrichtung (82), umfassend:
ein Förderband (72) mit einer Innenseite (19) und einer Außenseite (18) und einem Paar gegenüberliegende Seitenkanten (16 und 17); und
eine Auflagefläche (86), die unter der Innenseite (19) des Förderbands liegt; **dadurch gekennzeichnet, dass** das Förderband ferner eine Mehrzahl von multidirektionalen Rädern (30) umfasst, wobei jedes Rad eine Nabe (34) mit einer zentralen Drehachse (38) und einer äußeren Peripherie (50) beinhaltet;
eine Mehrzahl von Rollen (48), die auf der Peripherie der Nabe (34) angeordnet sind, um sich auf Rollenachsen (52) quer zur zentralen Drehachse (38) der Nabe zu drehen;
worin sich die Peripherie der Nabe an den Innen- und Außenseiten (19, 18) des Förderbands vorbei erstreckt; und
worin die Auflagefläche (86) die Rollen (48) auf der Peripherie der Nabe berührt, die sich an der Innenseite des Förderbands vorbei erstreckt, um eine Oberfläche (86) bereitzustellen, auf der die Rollen aufsitzen und die bewirkt, dass sich das Rad auf der zentralen Drehachse der Nabe dreht, während das Förderband entlang der Auflagefläche vorläuft.

10. Förderbandmodul (10), umfassend:
einen Modulkörper (12), der sich in einer Längenrichtung von einem ersten Ende (14) zu einem zweiten Ende (15), in der Breite von einer ersten Seitenkante (16) zu einer zweiten Seitenkante (17) und in der Dicke von einer Oberseite (18) zu einer Unterseite (19) erstreckt;
Gelenkelemente (20), die entlang der ersten und zweiten Enden angeordnet sind;
einen Hohlraum (28) im Modulkörper zwischen den ersten und zweiten Enden, der sich zu mindestens einer der Oberseite, der Unterseite, der ersten Seitenkante und der zweiten Seitenkante hin öffnet;
**dadurch gekennzeichnet, dass** das Förderbandmodul (10) ferner Folgendes umfasst:
ein multidirektionales Rad (30) einschließlich einer Nabe (34) mit einer zentralen Drehachse (38) und einer äußeren Peripherie (50), wobei eine Mehrzahl von Rollen (48) auf der Peripherie angeordnet sind, um sich auf Rollenachsen (52) quer zur zentralen Drehachse der Nabe zu drehen;
worin das Rad im Hohlraum zur Drehung um die zentrale Drehachse der Nabe aufgenommen ist.

11. Förderbandmodul (10) nach Anspruch 10, worin sich der Hohlraum (28) zu den Ober- und Unterseiten (18; 19) hin öffnet und worin sich die äußere Peripherie (50) der Nabe (34) vom Hohlraum an den Ober- und Unterseiten vorbei erstreckt.

12. Förderbandmodul (10) nach Anspruch 10, worin das multidirektionale Rad (30) im Modulkörper (12) montiert ist, wobei die zentrale Drehachse (38) der Nabe (34) zwischen den Ober- und Unterseiten (18; 19) des Modulkörpers angeordnet ist.

13. Förderbandmodul (10) nach Anspruch 10, worin die zentrale Drehachse (38) der Nabe (34) schräg zu den ersten und zweiten Seitenkanten (16, 17) des Modulkörpers (12) orientiert ist.

14. Förderbandmodul (10) nach Anspruch 10, worin die Rollenachsen (52) in einer Ebene normal zur zentralen Drehachse (38) der Nabe (34) liegen.

15. Förderbandmodul (10) nach Anspruch 10, worin die Rollen (94) eine Struktur (112) zur Beschränkung der Drehung der Rollen auf den Rollenachsen (110) auf eine Richtung beinhalten.

## Revendications

1. Bande transporteuse (72) comprenant :
une boucle sans fin ayant un côté extérieur (18) et un côté intérieur (19) définissant l'épaisseur de la bande transporteuse (82), et une paire de bords latéraux opposés (16, 17) définissant la largeur de la bande transporteuse (82) ;
la bande transporteuse étant **caractérisée en ce qu'**elle comprend en outre :
une pluralité de roues multidirectionnelles (30) disposées à des emplacements espacés le long de la boucle sans fil, chaque roue (30) comprenant :
un moyeu (34) ayant un axe central de rotation (38) et une périphérie extérieure (50) ;
une pluralité de rouleaux (48) disposés sur la périphérie du moyeu (34) pour tourner sur des axes de rouleau (52) perpendiculaires à l'axe central de rotation (38) du moyeu.

2. Bande transporteuse (72) selon la revendication 1, la bande transporteuse comprenant une pluralité de cavités (28) s'ouvrant sur le côté extérieur (18) et/ou le côté intérieur (19) de la boucle sans fin, les roues multidirectionnelles (30) étant montées dans les cavités avec les périphéries extérieures (50) des moyeux (34) s'étendant à partir des cavités après le côté extérieur et/ou le côté intérieur.

3. Bande transporteuse (72) selon la revendication 2, dans laquelle les cavités (28) s'ouvrent sur les deux côtés extérieur et intérieur (18, 19) et dans laquelle les périphéries extérieures (50) des moyeux (34) s'étendent à partir des cavités après les côtés intérieur et extérieur.

4. Bande transporteuse (72) selon la revendication 1, dans laquelle la boucle sans fin comprend une pluralité de modules de bande (16) liés ensemble de manière articulée en rangées (74), au moins une partie des rangées comprenant des cavités (28) dans lesquelles sont montées les roues multidirectionnelles (30).

5. Bande transporteuse (72) selon la revendication 1, dans laquelle les roues multidirectionnelles (30) sont montées dans la boucle sans fin avec les axes centraux de rotation (38) des moyeux (34) disposés entre les côtés intérieur et extérieur (18, 19).

6. Bande transporteuse (72) selon la revendication 1, dans laquelle les axes centraux de rotation (38) des moyeux (34) sont orientés obliques par rapport aux bords latéraux (16, 17) de la bande transporteuse.

7. Bande transporteuse (72) selon la revendication 1, dans laquelle les axes de rouleau (52) reposent dans un plan perpendiculaire à l'axe central de rotation (38) du moyeu (34).

8. Bande transporteuse (72) selon la revendication 1, dans laquelle les rouleaux (94) ont une structure (112) empêchant leur rotation sur les axes de rouleau (100) par rapport à une direction.

9. Transporteur (82) comprenant :
une bande transporteuse (72) ayant un côté intérieur (19), un côté extérieur (18) et une paire de bords latéraux opposés (16, 17) ; et
une surface d'appui (86) soutenant le côté intérieur (19) de la bande transporteuse ;
**caractérisé en ce que** la bande transporteuse comprend en outre : une pluralité de roues multidirectionnelles (30), chaque roue comprenant : un moyeu (34) ayant un axe central de rotation (38) et une périphérie extérieure (50) ;
une pluralité de rouleaux (48) disposés sur la périphérie du moyeu (34) pour tourner sur des axes de rouleau (52) perpendiculaires à l'axe central de rotation (38) du moyeu ;
la périphérie du moyeu s'étendant après les côtés intérieur et extérieur (19, 18) de la bande transporteuse ; et
la surface d'appui (86) étant en contact avec les rouleaux (48) sur la périphérie du moyeu et s'étendant après le côté intérieur de la bande transporteuse pour fournir une surface (86) afin que les rouleaux puissent y être montés et provoquent la rotation de la roue sur l'axe central de rotation du moyeu quand la bande transporteuse avance le long de la surface d'appui.

10. Module de bande transporteuse (10) comprenant :
un corps de module (12) s'étendant dans une direction longitudinale d'une première extrémité (14) à une seconde extrémité (15), en largeur d'un premier bord latéral (16) à un second bord latéral (17), et en épaisseur d'un côté supérieur (18) à un côté inférieur (19) ;
des éléments d'articulation (20) disposés le long des première et seconde extrémités ;
une cavité (28) dans le corps de moule entre les première et seconde extrémités s'ouvrant sur le côté supérieur, le côté inférieur, le premier bord latéral et/ou le second bord latéral ;
le module de bande transporteuse (10) étant **caractérisé en ce qu'**il comprend en outre :
une roue multidirectionnelle (30) comprenant un moyeu (34) ayant un axe central de rotation (38) et une périphérie extérieure (50) avec une pluralité de rouleaux (48) disposés sur la périphérie pour tourner sur des axes de rouleau (52) perpendiculaires à l'axe central de rotation du moyeu ;
la roue étant reçue dans la cavité en vue de sa rotation par rapport à l'axe central de rotation du moyeu.

11. Module de bande transporteuse (10) selon la revendication 10, dans lequel la cavité (28) s'ouvre sur les côtés supérieur et inférieur (18, 19) et dans lequel la périphérie extérieure (50) du moyeu (34) s'étend à partir de la cavité après les côtés supérieur et inférieur.

12. Module de bande transporteuse (10) selon la revendication 10, dans lequel la roue multidirectionnelle (30) est montée dans le corps de module (12) avec l'axe central de rotation (38) du moyeu (34) disposé entre les côtés supérieur et
inférieur (18, 19) du corps de module.

13. Module de bande transporteuse (10) selon la revendication 10, dans lequel l'axe central de rotation (38) du moyeu (34) est orienté oblique par rapport aux premier et second bords latéraux (16, 17) du corps de module (12).

14. Module de bande transporteuse (10) selon la revendication 10, dans lequel les axes de rouleau (52) reposent dans un plan perpendiculaire à l'axe central de rotation (38) du moyeu (34).

15. Module de bande transporteuse (10) selon la revendication 10, dans lequel les rouleaux (94) ont une structure (112) empêchant leur rotation sur les axes de rouleau (110) par rapport à une direction.
